# EUROPEAN PATENT SPECIFICATION

(11) **EP 3 607 208 B1**
(45) Date of publication and mention of the grant of the patent: **18.10.2023**
(21) Application number: 18717672.2
(22) Date of filing: 04.04.2018
(51) Int. Cl.: F04D 19/04, F04D 27/00, F04D 29/051, F04D 29/059, F04D 29/64, F16C 19/52, F16C 25/06

(54) **PRELOAD FORCE TOOL**
VORSPANNKRAFTWERKZEUG
OUTIL DE FORCE DE PRÉCHARGE

(30) Priority: 05.04.2017 GB 201705465
(43) Date of publication of application: 12.02.2020
(73) Proprietor: Edwards Limited, Burgess Hill, Sussex RH15 9TW (GB)
(72) Inventor: MILES, Christopher, Burgess Hill Sussex RH15 9TW (GB); MILNER, Paul, Burgess Hill Sussex RH15 9TW (GB); SALLOUM, Richard, Burgess Hill Sussex RH15 9TW (GB)
(74) Representative: Norton, Ian Andrew
(86) International application number: PCT/GB2018/050910
(87) International publication number: WO 2018/185483

(56) References cited:
- EP-A1- 3 106 668
- EP-A2- 2 333 344
- FR-A1- 2 674 956
- GB-A- 2 261 288
- JP-A- H05 118 325
- JP-A- 2000 274 392
- SU-A1- 756 098

## Description

### Field of the Invention

The present invention relates to a force gauge for measuring and adjusting the bearing preload force in a turbomolecular pump.

### Background to the Invention

Vacuum pumps typically comprise an impeller in the form of a rotor mounted on a shaft for rotation relative to a surrounding stator. The rotor shaft is supported by a bearing arrangement comprising two bearings located at or intermediate respective ends of the shaft. Typically, the upper, inlet-side, bearing may be in the form of a passive magnetic bearing, and the lower, outlet-side, bearing is in the form of a rolling bearing.

In order to improve rolling bearing performance, a bearing preload force may be applied for normal operating conditions, i.e. the rotor shaft assembly will be biased axially in one direction. Typically, the bearing preload force is generated by the upper passive magnetic bearing. Usually, the rotor shaft is biased towards the pump inlet.

Typically, gross stops are featured to limit the axial movement between positive and negative preloads. The gross stops may act upon the rolling bearing outer race or a damping assembly which maybe coupled to the bearing outer race.

The rolling bearing inner race is usually coupled to the turbo rotor shaft. When a large enough force is applied to the rotor, which is opposing the force of the magnetic bearing, the rotor shaft assembly will be forced to change position axially in the opposite direction, this is known as negative preload. The transition from a positive to a negative preload is usually accompanied by an audible noise, e.g. a click or knock.

During servicing, bearing preload measurement and adjustment may be required following a rolling bearing change. This is preferable to ensure that the bearing operates within acceptable preload limits.

A number of methods have been employed to measure the preload force, these include employing force transducers, load cells or weights with carriers. However, force transducers or load cells with their instrumentation have proven prohibitively expensive for in-field use. Whereas, at the lower end of the price scale, the use of weights has proven to be too complicated and too bulky for practical use. Moreover, it relies on the experience and feel of the operator adding further expense in operator training. For these reasons, a cheap, simple and accurate method for measuring the bearing preload force is required.

GB 2 261 288 A, JP 2000 274392 A, EP 2 333 344 A2 and EP 3 106 668 A1 are relevant prior art documents.

The present invention addresses these and other problems with the prior art.

### Summary of the Invention

Accordingly, in a first aspect, the present invention provides a bearing preload force gauge according to claim 1.

The gauge comprises a housing, an indicator for indicating the bearing preload force, and an actuator coupled to an impeller engagement surface by a member configured to provide a resilient bias between the actuator and the impeller engagement surface. Typically, the impeller engagement surface may be located at a distal end of an impeller location member, for instance an impeller engagement peg. Typically, the impeller location member will be configured such that in use the impeller engagement surface engages the impeller shaft, or a surface coupled to and directly movable with the impeller shaft, and is movable therewith. Accordingly, a force transferred to the engagement surface may be transferred to the impeller, and/or movement of the engagement surface may move the impeller.

Typically, impeller location member may extend forward of the housing, at rest and/or during use, so as to extend through the turbomolecular pump housing to the impeller.

The impeller location member may further comprise a surface for engaging the resilient bias member, for instance an upper surface of a protrusion, for instance a radially extending circumferential flange on the shaft of the location member.

The actuator, the resilient member, and the impeller location member comprising the impeller engagement surface may be in a sliding arrangement relative to the housing. That is to say, one or more parts are in sliding contact with the housing. Typically, the actuator, the resilient member, and the impeller location member comprising the impeller engagement surface will be arranged to move in a reciprocating motion along a longitudinal axis of the gauge and/or relative to the housing. In use, the longitudinal axis of the gauge may be substantially aligned with the axis of the rotor shaft of the turbomolecular pump.

The housing of the gauge may be configured to couple with the housing of the turbomolecular pump in order to hold the gauge substantially stationary relative thereto during use.

The housing of the gauge also includes means for adjusting the bearing preload force. The means for adjusting the bearing preload force are configured to adjust the position of the inner race of a passive magnetic bearing relative to its outer race. Preferably the bearing preload force can be measured and adjusted without removing the gauge from the turbomolecular pump.

The gauge is arranged such that, in use, the bearing preload force is indicated by coupling the impeller engagement surface with the pump impeller and moving the actuator relative to, typically towards, the engagement surface against the resilient bias. The gauge is configured such that, as the actuator is moved towards the engagement surface, the restoring (reaction) force provided by the resilient member increases. Typically, the restoring (reaction) force of the resilient member increases until the bearing preload force is overcome (i.e. the bearing preload force changes from positive to negative). Typically, the bearing preload force is indicated when the actuator has moved sufficiently to overcome the bearing preload force.

Advantageously, bearing preload gauges of the invention can be used in any orientation. Accordingly, the gauges are particularly useful in the measurement of multistage turbomolecular pumps, where the rotor shaft and preload force may be in a non-vertical, e.g. horizontal, direction.

Gauges according to the invention are configured to measure the bearing preload force in a turbomolecular pump with an upper, inlet-side, passive magnetic bearing and a lower, outlet-side, rolling bearing, wherein the bearing preload force is positive, i.e. in the direction of the pump inlet. They provide an inexpensive, accurate, and easy to use solution to measuring the bearing preload force in a turbomolecular pump.

The resilient member is configured to provide a resilient bias between the actuator and the impeller engagement surface. That is to say, it resiliently resists movement of the actuator relative to the impeller engagement surface. Typically, the resilient member resiliently resists movement of the actuator towards the impeller engagement surface, i.e. they are biased apart. Typically, the resilient member is a spring, preferably a compression spring, preferably a helical compression spring. Preferably, the spring is substantially linear. The spring rate of the spring may be chosen so that within the spring's compression range, the preferred preload force range is achieved.

Preferably, the gauge is configured so that when the bearing preload force is overcome the bearing preload force indicator provides an indication as to whether the bearing preload force is within, or outside, a predetermined preferred range. Preferably, when the bearing preload force is overcome the bearing preload force indicator provides an indication that the bearing preload force is within a predetermined range if the bearing preload force is within said predetermined preferred range.

Additionally, or alternatively, when the bearing preload force is overcome the bearing preload force indicator may provide an indication that the bearing preload force is outside a predetermined preferred range if the bearing preload force is outside the predetermined preferred range, preferably a different indication to that provided when in said predetermined preferred range.

Preferably, when the bearing preload force is overcome, if the bearing preload force is outside the predetermined preferred range, the indicator indicates whether the bearing preload force is above or below the predetermined preferred range.

Typically, the indications provided by the indicator are visual. Indicium may be selected from the group consisting of structures formed in or on the surface of the housing or actuator, printed indicia, or combinations thereof. The indications may include primary and secondary indicia.

Advantageously, the indicators of the invention may not include a scale or numerical output which must be read and interpreted. Preferably, the user can tell directly from the indicator whether the bearing preload force is within the predetermined preferred range or not, i.e. without having to consult a secondary source to decide whether the bearing preload force is acceptable for that particular turbomolecular pump. A gauge will usually be configured for a specific turbomolecular pump model with a specific pump geometry and predetermined preferred bearing preload force and range.

Typically, the indicator comprises indicium coupled to the housing or actuator and a corresponding indicium identifier, wherein in use the indicium and identifier are movable relative to one another to indicate the bearing preload force. The indicium identifier may be coupled to the other of the housing or actuator. Typically, one of the indicium and identifier will remain stationary relative to the gauge housing and/or turbomolecular pump housing during use. Typically, the indicium will be formed on one of the housing or actuator and the indicium identifier will be formed on the other of the housing or actuator.

An indicium may indicate the lower limit of the preferred preload force range and an indicium may indicate the upper limit of the preferred preload force range. The indicia may be a single indicium or separate, likewise they may be the same or different.

Additionally, or alternatively, the indicator may comprise an indicium identifying when the bearing preload force is in the predetermined preferred preload force range. In an embodiment, the indicator includes a first indicium indicating the lower limit of the preferred preload force range, a second indicium identifying the preferred preload force range, and a third indicium indicating the upper limit of the preferred preload force range.

In embodiments, the indicia may be in the form of a series of steps formed in an upper portion of the gauge housing. Typically, a first upper step indicates the lower limit of the preferred preload force range and a second, typically adjacent, lower step indicates the upper limit of the preferred preload force range.

Additionally, the first step and the second step may each comprise a secondary indicium indicating the preferred preload force range. For instance, a first secondary indicium may be present on the first step indicating that above that step is outside of the predetermined preferred range. Additionally, or alternatively, the second step may include a second secondary indicium, different to the first indicium, indicating that above the second step, but below the first step, is within the predetermined preferred range. Optionally, a third still lower step may include a secondary indicium indicating that below the second step is outside the predetermined preferred range.

The secondary indicium for the second step may be written or a symbol and may generally indicate a positive outcome, e.g. "Go", "Pass", the colour green, or a tick. Additionally, or alternatively, the secondary indicium for the first and/or optional third step may be written or a symbol, and may generally indicate a negative outcome, e.g. "No Go", "Fail", the colour red, or a cross.

Additionally, or alternatively, the indicium identifier may be in the form of a printed marking, protrusion or indentation on an outer surface of the actuator which in use moves with the actuator relative to the steps. Accordingly, when the force applied to the actuator overcomes the bearing preload force the position of the identifier relative to the indicium indicates whether the bearing preload force is within the predetermined preferred range.

Alternatively, the indicium identifier may include part of the housing of the gauge, or a marking, protrusion or indentation on the housing of the gauge, and the actuator may include indicia or indicium identifying the upper and lower limits of the preferred preload force range, the actuator being movable relative to the housing.

Typically, overcoming the bearing preload force is accompanied by an audible signal, such as a click. In use, the user can use the audible signal to determine when the bearing preload force has been overcome and therefore when to take a measurement from the indicator. Additionally, or alternatively, the user may be able to feel when the bearing preload force has been overcome because further movement of the actuator will require a lesser increase in force.

According to the invention, the gauge further comprises a preload force adjuster for altering the bearing preload force on the rotor of the turbomolecular pump.

The invention thus provides a preload force tool for a turbomolecular pump configured such that the bearing preload force is adjustable, the tool comprising a preload force indicator and a preload force adjuster.

Typically, the turbomolecular pump will comprise a passive magnetic bearing applying the bearing preload force and the bearing preload force adjuster will be configured to adjust the magnitude of the bearing preload force applied by the magnetic bearing. The bearing preload force adjuster is able to move the inner race of the magnetic bearing relative to the outer race.

Preferably the tool can be used to measure and adjust the bearing preload force without decoupling the tool from the turbomolecular pump.

The housing, actuator, and impeller location member may each be formed using additive manufacturing, e.g. 3D printing. Typically, they will be made from a polymer. The spring will typically comprise spring steel or another suitably alloy.

The housing, actuator and impeller location member of the invention may each be manufactured from a material selected from the group consisting of a polymer, a composite, and a metal or alloy.

Polymers are particularly preferred and may be selected from group consisting of elastomers, thermoplastic materials or thermosets. Thermoplastic materials are preferred. Typically, the polymer is selected from the group consisting of polyolefins, such as polyethylene and polypropylene; polyvinylchloride, and polyethylene terephthalate, and derivatives and copolymers thereof.

The polymers may additionally include one or more from the group consisting antistatics, antioxidants, mould release agents, flameproofing agents, lubricants, colorants, flow enhancers, fillers, including nanofillers, light stabilizers and ultraviolet light absorbers, pigments, anti-weathering agents and plasticisers.

The invention provides a bearing preload force gauge for indicating the bearing preload force on a turbomolecular pump rotor bearing comprising a housing, an indicator for indicating the bearing preload force, and an actuator coupled to an impeller location member by a member configured to provide a resilient bias between the actuator and the impeller location member wherein one or more of the housing, indicator, actuator and impeller location member may be additive manufactured.

In all aspects and embodiments of the invention the predetermined preferred range for the bearing preload force may be between about 5 N and about 50 N, preferably between about 8 N and about 10.5 N. Typically, the span of the range is no more than 1.5 N, preferably 1 N, either side of a preferred bearing preload force for the turbomolecular pump. Typically, the predetermined preferred bearing preload force is between about 8 N and about 10.5 N, an example is about 9.3 N.

The spring (resilient member) will be chosen such that the return (reaction) force may be equal to the force required to overcome the bearing preload force within the compression range of the spring. The gauge may be varied to accommodate different preload forces for different turbomolecular pumps by selecting an alternative spring with an alternative spring rate, or by altering the arrangement of the indicator (e.g. the spacing between the parts of the indicator indicating the upper and lower extremities of the predetermined preferred bearing preload force), or a combination thereof. The resilient member (spring) and configuration of the indicator will be selected such that, in use, if the bearing preload force is within a predetermined preferred range the indicator indicates that this is the case, whereas, if the bearing preload force is outside the predetermined range, again the indicator indicates that is the case.

Preferably, the distance on the indicator between the indicium indicating the lower end of the range for the predetermined preferred bearing preload force and the indicium indicating the upper end of the range for predetermined preferred bearing preload load force will be greater than 1 mm, preferably from about 1 mm to about 20 mm, 2 mm being an example.

In all aspects and embodiments of the invention, the bearing preload force gauge or preload force tool is typically substantially free from electronics, preferably free from electronics. Typically, the gauge or tool, and, in particular, the indicator is entirely mechanical.

In a further aspect of the invention, there is provided a method of measuring the bearing preload force of a turbomolecular pump according to claim 13.

The method comprises the steps of providing a turbomolecular pump comprising a rotor bearing having a preload force applied thereto; providing preload force gauge comprising a housing, an indicator for indicating the bearing preload force, and an actuator coupled to an impeller engagement surface by a member configured to provide a resilient bias between the actuator and the impeller engagement surface; coupling the impeller engagement surface to the impeller; moving the actuator relative to the engagement surface against the resilient bias so as to overcome the bearing preload force on the bearing; and reading an indication of the bearing preload force from the indicator when the bearing preload force is overcome.

The gauges according to any other aspect or embodiment of the invention may be used in said method.

### Brief Description of the Figures

Preferred features of the present invention will now be described, by way of example, with reference to the accompanying drawings, in which:
Fig. 1 shows a section view of a bearing preload force gauge.
Fig. 2 shows a section view of a bearing preload force gauge in situ.
Fig. 3 shows a bearing preload force gauge.
Fig. 4 shows a schematic of a bearing preload force gauge illustrating an indicator preferred range.
Fig. 5 shows a bearing preload force gauge at rest.
Fig. 6 shows a bearing preload force gauge in a fail configuration (preload force is too low).
Fig. 7 shows a bearing preload force gauge in a pass configuration.
Fig. 8 shows a bearing preload force gauge in a fail configuration (preload force is too high).
Fig. 9 shows an alternative indicator in a series of configurations.

### Detailed Description

The present invention provides a bearing preload force gauge for indicating and adjusting the bearing preload force on a turbomolecular pump rotor bearing.

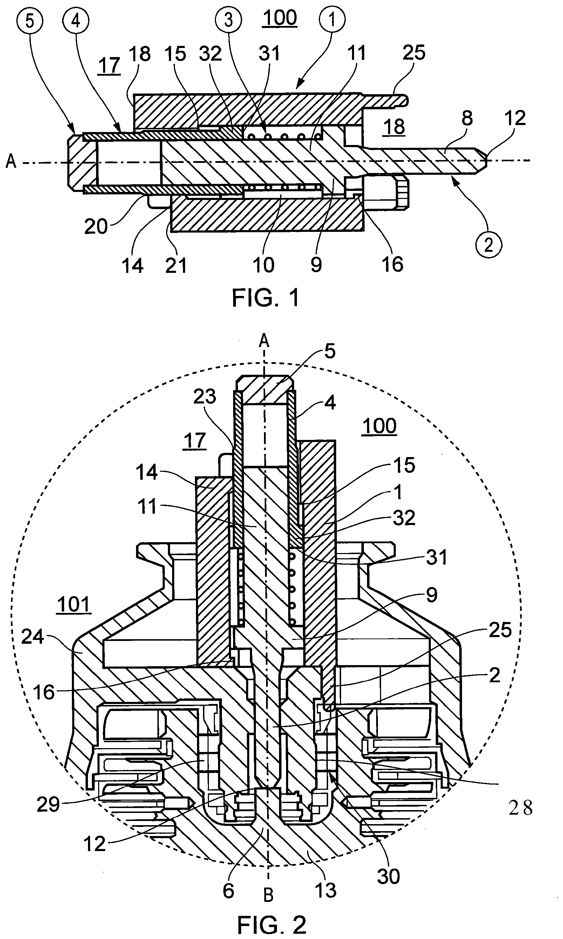

As illustrated in Figure 1, in an example, the gauge (100) comprises a housing (1), an impeller location member (2), an actuator (4) and a resilient member (3) (in the illustrated example a helical compression spring) between the actuator (4) and the impeller location member (2).

Referring also to Figure 2, the impeller location member (2) is configured to transmit a force applied thereto by the actuator (4) to the impeller (6) of the turbomolecular pump (7). The impeller location member (2) comprises a forward portion (8) configured to extend forward of the housing (1) to couple with the pump impeller (7) and a radially extending circumferential flange (9) that slidably engages with an inner wall (10) of the gauge housing (1). The circumferential flange (9) may be located generally centrally along the length of the impeller location member (2), dividing the forward portion (8) of the location member from a rear portion (11). The illustrated impeller location member (2) further comprises a rearward portion (11) slidably receivable within the spring (3) and actuator (4).

At its tip the impeller location member (2) comprises a impeller engagement surface (12) which, in use, couples with the impeller (6), preferably the surface (12) directly engages the impeller (6), preferably the surface directly engages the rotor shaft (13).

The illustrated housing (1) is generally cylindrical with a central channel configured to receive the actuator (4), resilient member (3) and the impeller location member (2). The wall of the central channel (formed by the inner wall of the housing (10)) may comprise ribs or channels configured to engage with corresponding protrusions or indentations on the actuator (4) and/or impeller location member (2), to aid sliding. The channel further includes shoulders (14, 15, 16) at proximal (17) and distal (18) ends thereof to retain the actuator (4) and impeller location member (2) within the housing (1).

The housing (1) further includes a series of steps (19, 20, 21) on its upper surface (22). These, along with a circumferential indentation (23) on the actuator (4), form the indicator for indicating whether the bearing preload force is within a predetermined preferred range.

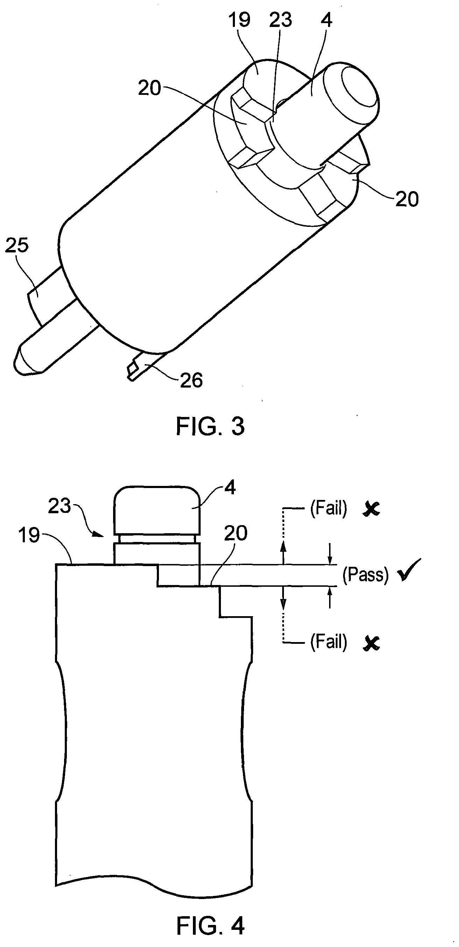

As better illustrated in in Figures 3 and 4, in the example, the upper step (19) indicates lower limit of the predetermined preferred bearing preload force range and the second step indicates the upper limit of the predetermined preferred bearing preload force range (20). In this example, the circumferential indentation (23) on the actuator (4) is the indicium identifier, whereas the steps form the primary indicia. The steps (19, 20) further include secondary indicia "Go" and "No Go" formed in their surfaces. If, when the bearing preload force is overcome, the indicium identifier (23) is located between the upper step (19) and second step (20), as illustrated in Fig. 4, this is a pass (i.e. the bearing preload force is in the predetermined preferred range). Alternatively, if, when the bearing preload force is overcome, the indicium identifier is located above the upper first step (19), as illustrated in Fig. 4, this is a fail (the bearing preload force is too low).

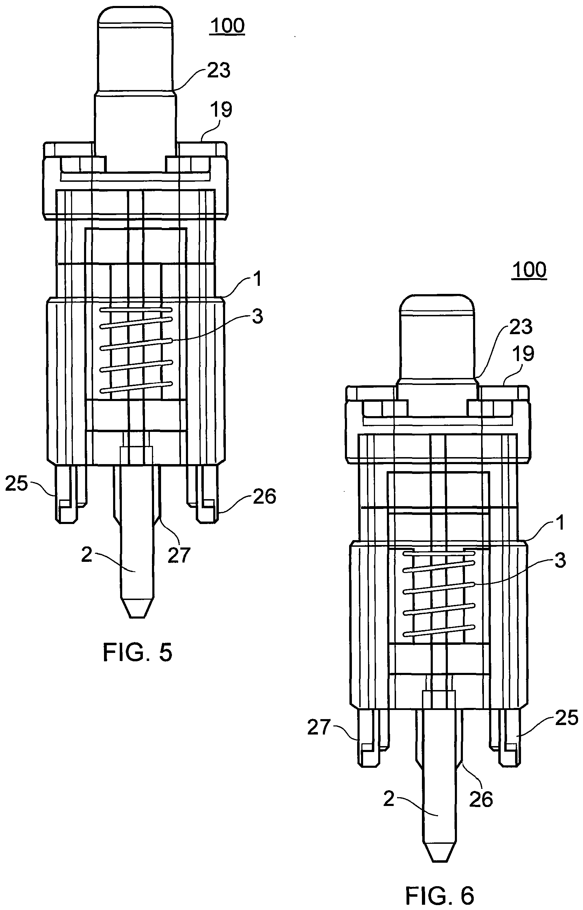

As illustrated in Fig. 2, the lower end of the gauge housing (1) is configured to couple with the housing of the turbomolecular pump (24) so that the gauge housing (1) remains substantially stationary relative to the pump housing (24) whilst a bearing preload force measurement is taken. The lower (distal) end of the exemplified housing (1) further includes three adjustor drive legs (25, 26, 27) (better illustrated in Fig. 5 to 8). The adjustor drive legs (25, 26, 27), as well as contributing to the stability of the gauge (100) during use, are configured to allow the gauge (100) to adjust the bearing preload force, typically by facilitating movement of the inner race (28) of the passive magnetic bearing (30) relative to its outer race (29). By rotating the device i.e. the gauge (100) about its longitudinal axis (A) in one direction the bearing preload force can be increased, whereas by rotating the device (100) about its longitudinal axis (A) in an opposite direction the bearing preload force can be decreased. The bearing preload force can be measured and adjusted by the same device (100) and preferably without decoupling said device (100) from the turbomolecular pump (101). Typically, the bearing preload force is adjusted when the gauge (100) is in an at rest configuration.

The actuator (4) comprises rearward facing user interface (5) which in use may be pressed by an operator thumb or finger. The actuator (4) further comprises a resilient member (e.g. spring) engagement surface (31), in the example the downward (forward) facing surface (31) of a radially extending circumferential flange (32) at a distal end of the actuator (4). The actuator (4) is configured to slide in a reciprocating motion within the housing channel (10). The actuator (4) comprises an inner channel (33) configured to receive the rearward portion (11) of the impeller location member (2) in a reciprocating sliding arrangement.

When pushed in a forward (downward) direction, the actuator (4) pushes the spring against the impeller location member (2), thereby compressing the spring (3). The impeller location member (2) transmits the force to the impeller (6) of the turbomolecular pump (101). By increasing the force applied to the actuator (4), the spring (3) is compressed further and the spring's restoring (reaction) force increases: likewise, the force transmitted to the impeller (6) (and rotor bearing) increases. The force applied to the actuator (4) is increased until the force transmitted to the impeller (6) is sufficient to overcome the bearing preload force. At that point a click will be heard and the indicator is read to establish whether the bearing preload force is within its predetermined preferred range.

Releasing the actuator (4) allows the gauge (100) and turbomolecular pump (101) to return to their respective at rest positions.

If the bearing preload force was not within the predetermined preferred range for that turbomolecular pump (101), the bearing preload force can be adjusted and the bearing preload force remeasured. The process may be repeated until the bearing preload force is within the predetermined preferred range.

The exemplified device is for use on a nEXT85^{™} available from Edwards Vacuum^{™} and is configured to have a predetermined preferred bearing force range of from about 8.3 N to about 10.3 N. The illustrated spring is a LC036G05S available from Lee Spring Ltd. with a spring rate of 1.05 N/mm. The distance between the uppermost step and the next step is 2 mm. The skilled person will appreciate that the specific spring and indicator arrangement will be chosen depending on the preferred bearing preload force range for a specific turbomolecular pump.

The illustrated device may be handheld and/or manually actuated. By manually actuated it is understood that the force required to overcome the bearing preload force is applied to the actuator by the operator's hand.

The housing, actuator and impeller location member are additive manufactured from Objet Veroblue RGD840.

Figures 5 to 8 illustrate the device in various configurations. Figure 5 shows the device (100) in its at rest configuration. In this configuration, no force is applied to the actuator (4), the spring (3) is not displaced or compressed, and the actuator (4) and the impeller location member (2) are in their most upward positions. In this configuration, the circumferential groove (23) of the indicator is well above the top step (19) of the gauge housing (1).

Figure 6 illustrates the device (100) in a configuration where the bearing preload force is too low. The spring (3) is compressed and the actuator (4) has moved downward (forward) relative to the housing (1); however, the circumferential groove (23) is above the top step (19) of the gauge housing (1) indicating that bearing preload force is too low.

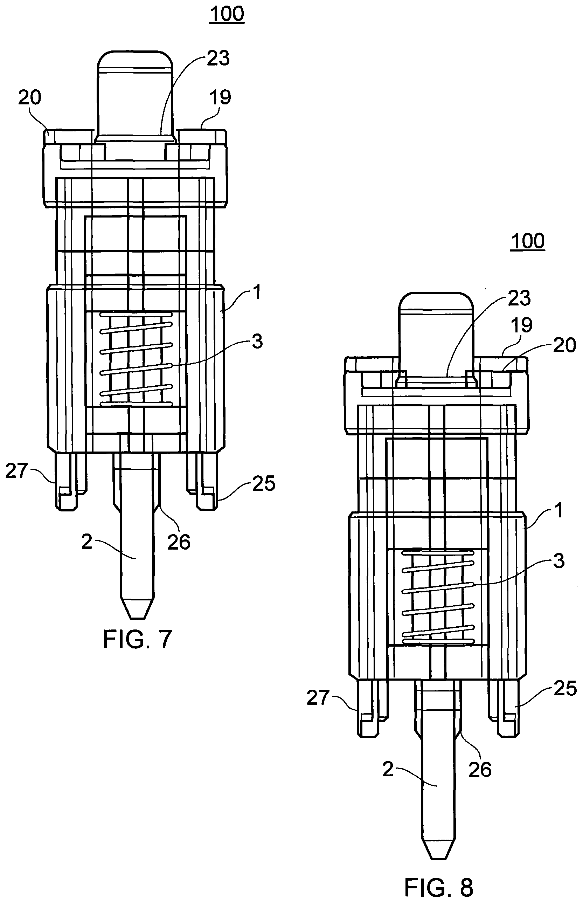

Figure 7 illustrates the device (100) in a configuration where the bearing preload force is within the predetermined preferred range. The spring (3) is further compressed and the actuator (4) and impeller location member (2) have moved further downward (forward) relative to the housing (1). In this configuration, the circumferential groove (23) is below the top step (19) of the gauge housing, but above the second step (20), illustrating that bearing preload force is within the predetermined preferred range.

Figure 8 illustrates the device in a configuration where the bearing preload force is too high. The spring (3) is compressed further still and the actuator (4) and impeller location member (2) have moved even further downward (forward) relative to the housing (1). In this configuration, the circumferential groove (23) is below the second step (20) of the gauge housing (1), indicating that bearing preload force is too high.

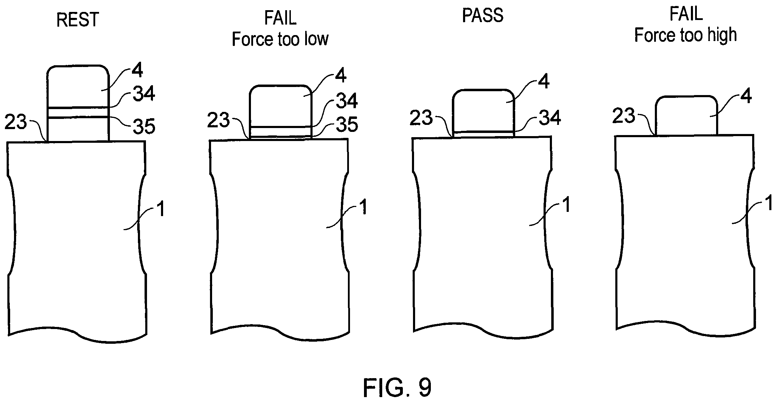

Figure 9 illustrates an alternative example of an indicator suitable for use in the present invention in a series of configurations. In this example, the indicator comprises two indicia (34, 35) in form of circumferential grooves formed in the surface of the actuator (4). In use, as the actuator (4) is pushed into the housing (1), the upper groove (34) indicates the lower limit of the predetermined preferred range for the bearing preload force, whereas the lower groove (35) indicates the upper limit of the predetermined preferred range for the bearing preload force. In this example, the indicium identifier (23) is the upper surface of the gauge housing (1) immediately adjacent the actuator (4).

Thus, in contrast to the previous example, the indicium (34, 35) are located on the actuator (4) and movable relative to a stationary indicium identifier (23) located on the housing (1).

Accordingly, as illustrated, if as the bearing preload force is overcome during testing both grooves (34, 35) are above the housing (1) then the bearing preload force is too low, whereas if neither of the grooves is above the housing (1) then the bearing preload force is too high. In contrast, if when the bearing preload force is overcome the upper groove (34) is above the housing (1) but the lower groove is not, then the bearing preload force is within the predetermined preferred range. In this example, no secondary indicia are employed. It will be appreciated that the grooves could be replaced with printed lines or other suitable indicia.

It will be appreciated that various modifications may be made to the embodiments shown without departing from the scope of the invention which is solely defined by the accompanying claims.

## Claims

1. A bearing preload force gauge (100) for a turbomolecular pump comprising an outlet side rotor roller bearing under an adjustable preload force, an inlet-side, passive magnetic bearing having an inner race (28) and an outer race (29), the inner race (28) is configured to be positioned within the turbomolecular pump, and an impeller (6) configured for engagement with the gauge (100) and the impeller comprising the outer race (29), said gauge is configured to adjust and indicate the bearing preload force, the gauge comprising:
a housing (1), said housing (1) comprising preload force adjustor drive legs (25, 26, 27), configured, in use, by rotating the gauge (100) about its longitudinal axis , to axially move the inner race (28) relative to the outer race (29) to adjust the bearing preload force; and
an indicator (19, 20, 21) for indicating the bearing preload force and an actuator (4) coupled to an impeller engagement surface (12) configured to engage with the impeller with a member (3) configured to provide a resilient bias between the actuator and the impeller engagement surface.

2. The gauge according to claim 1, configured in use, to indicate the bearing preload force by coupling the impeller engagement surface with the turbomolecularpump impeller and moving the actuator relative to the engagement surface against the action of the resilient bias member to overcome the bearing preload force.

3. The gauge according to claim 1 or 2 wherein the actuator, the resilient bias member, and an impeller location member (2) comprising the impeller engagement surface are movable in a reciprocating motion relative to the housing.

4. The gauge according to claims 1 to 3 wherein when the bearing preload force is overcome the indicator provides an indication as to whether the bearing preload force is within or outside a predetermined preferred range.

5. The gauge according to claim 4 wherein when the bearing preload force is overcome the indicator provides a first indication if the bearing preload force is within the predetermined preferred range.

6. The gauge according to claim 5 wherein when the bearing preload force is overcome the indicator provides a second indication if the bearing preload force is outside the predetermined preferred range, said second indication being different from the first indication.

7. The gauge according to claims 4 to 6 wherein when the bearing preload force is overcome if the bearing preload force is outside the predetermined preferred range the indicator indicates whether the bearing preload force is above or below the predetermined preferred range.

8. The gauge according to any preceding claim wherein the indication provided by the indicator is visual and/or wherein the indicator comprises indicium (19, 20, 21, 34, 35) coupled to the housing or actuator and an indicium identifier (23), wherein in use the indicium and identifier are movable relative to one another to indicate the bearing preload force.

9. The gauge according to claim 8 wherein an indicium indicates the lower limit of a predetermined preferred preload force range and an indicium indicates the upper limit of the predetermined preferred preload force range.

10. The gauge according to claim 8 or 9 comprising an indicium indicating when the bearing preload force is in a predetermined preferred range.

11. The gauge according to claim 8, 9 or 10, wherein the indicium comprises a stepped upper surface on the housing and wherein a first step indicates a lower limit of a predetermined preferred preload force range and a second step indicates the upper limit of the predetermined preferred preload force range, preferably wherein the first step and the second step each comprise a secondary indicium indicating the predetermined preferred preload force range.

12. The gauge according to any preceding claim wherein the resilient member comprises a spring, preferably a compressive spring, preferably a helical compressive spring; and/or wherein overcoming the bearing preload force is accompanied by an audible signal.

13. A method for measuring and adjusting the bearing preload force on a turbomolecular pump rotor bearing, the method comprising the steps of:
a) providing a turbomolecular pump comprising an outlet side rotor roller bearing under an adjustable preload force, an inlet-side, passive magnetic bearing having an inner race (28) and an outer race (29), the inner race (28) is configured to be positioned within the turbomolecular pump, and an impeller (6) comprising the outer race (29);
b) providing the preload force gauge (100) according to any preceding claim;
c) coupling the impeller engagement surface (12) with the impeller
d) moving the actuator (4) relative to the impeller engagement surface against the resilient bias so as to overcome the bearing preload force; and
e) reading an indication of the bearing preload force from the indicator (19, 20, 21) when the bearing preload force is overcome:
f) further comprising the step of adjusting the bearing preload force using the gauge by rotating the gauge (100) about its longitudinal axis , to move the inner race (28) of the passive magnetic bearing (30) relative to its outer race (29) and optionally remeasuring the bearing preload force, preferably without removing the gauge from the turbomolecular pump.

## Patentansprüche

1. Lagervorspannkraft-Messeinrichtung (100) für eine Turbomolekularpumpe mit einem auslassseitigen Rotorwälzlager unter einer einstellbaren Vorspannkraft, einem einlassseitigen passiven Magnetlager mit einem inneren Lagerring (28) und einem äußeren Lagerring (29), wobei der innere Lagerring (28) zum Anordnen in der Turbomolekularpumpe konfiguriert ist, und einem Laufrad (6), das zum Eingriff mit der Messeinrichtung (100) konfiguriert ist, und wobei das Laufrad den äußeren Lagerring (29) aufweist, wobei die Messeinrichtung zum Einstellen und Anzeigen der Lagervorspannkraft konfiguriert ist, wobei die Messeinrichtung Folgendes aufweist: ein Gehäuse (1), wobei das Gehäuse (1) Vorspannkraft-Einstellungs-Antriebsbeine (25, 26, 27) aufweist, die dazu konfiguriert sind, in Verwendung durch Drehen der Messeinrichtung (100) um ihre Längsachse den inneren Lagerring (28) relativ zum äußeren Lagerring (29) axial zu bewegen, um die Lagervorspannkraft einzustellen; und eine Anzeigeeinrichtung (19, 20, 21) zum Anzeigen der Lagervorspannkraft und einen Aktor (4), gekoppelt mit einer zum Eingriff mit dem Laufrad konfigurierten Laufrad-Eingriffsfläche (12), mit einem Element (3), das zum Bereitstellen einer elastischen Vorspannung zwischen dem Aktor und der Laufrad-Eingriffsfläche konfiguriert ist.

2. Messeinrichtung nach Anspruch 1, die in Verwendung so konfiguriert ist, dass sie die Lagervorspannkraft anzeigt, indem die Laufrad-Eingriffsfläche mit dem Laufrad der Turbomolekularpumpe gekoppelt und der Aktor relativ zur Eingriffsfläche gegen die Wirkung des elastischen Vorspannelements bewegt wird, um die Lagervorspannkraft zu überwinden.

3. Messeinrichtung nach Anspruch 1 oder 2, wobei der Aktor, das elastische Vorspannelement und ein Laufradpositionselement (2), das die Laufrad-Eingriffsfläche aufweist, in einer Hin- und Herbewegung relativ zum Gehäuse beweglich sind.

4. Messeinrichtung nach einem der Ansprüche 1 bis 3, wobei die Anzeigeeinrichtung bei Überwindung der Lagervorspannkraft einen Hinweis darauf liefert, ob die Lagervorspannkraft innerhalb oder außerhalb eines vorbestimmten bevorzugten Bereichs liegt.

5. Messeinrichtung nach Anspruch 4, wobei die Anzeigeeinrichtung bei Überwindung der Lagervorspannkraft einen ersten Hinweis liefert, wenn die Lagervorspannkraft innerhalb des vorbestimmten bevorzugten Bereichs liegt.

6. Messeinrichtung nach Anspruch 5, wobei die Anzeigeeinrichtung bei Überwindung der Lagervorspannkraft einen zweiten Hinweis liefert, wenn die Lagervorspannkraft außerhalb des vorbestimmten bevorzugten Bereichs liegt, wobei der zweite Hinweis sich vom ersten Hinweis unterscheidet.

7. Messeinrichtung nach einem der Ansprüche 4 bis 6, wobei bei Überwindung der Lagervorspannkraft, wenn die Lagervorspannkraft außerhalb des vorbestimmten bevorzugten Bereichs liegt, die Anzeigeeinrichtung anzeigt, ob die Lagervorspannkraft über oder unter dem vorbestimmten bevorzugten Bereich liegt.

8. Messeinrichtung nach einem der vorhergehenden Ansprüche, wobei der von der Anzeigeeinrichtung gelieferte Hinweis visuell ist und/oder wobei die Anzeigeeinrichtung ein Zeichen (19, 20, 21, 34, 35), das mit dem Gehäuse oder dem Aktor gekoppelt ist, und einen Zeichen-Identifikator (23) aufweist, wobei in Verwendung das Zeichen und der Identifikator relativ zueinander beweglich sind, um die Lagervorspannkraft anzuzeigen.

9. Messeinrichtung nach Anspruch 8, wobei ein Zeichen die untere Grenze eines vorbestimmten bevorzugten Vorspannkraftbereichs und ein Zeichen die obere Grenze des vorbestimmten bevorzugten Vorspannkraftbereichs anzeigt.

10. Messeinrichtung nach Anspruch 8 oder 9, die ein Zeichen aufweist, das anzeigt, wann die Lagervorspannkraft in einem vorbestimmten bevorzugten Bereich liegt.

11. Messeinrichtung nach Anspruch 8, 9 oder 10, wobei das Zeichen eine abgestufte obere Fläche auf dem Gehäuse umfasst und wobei eine erste Stufe eine untere Grenze eines vorbestimmten bevorzugten Vorspannkraftbereichs anzeigt und eine zweite Stufe die obere Grenze des vorbestimmten bevorzugten Vorspannkraftbereichs anzeigt, wobei die erste Stufe und die zweite Stufe bevorzugt jeweils ein sekundäres Zeichen aufweisen, das den vorbestimmten bevorzugten Vorspannkraftbereich anzeigt.

12. Messeinrichtung nach einem der vorhergehenden Ansprüche, wobei das elastische Element eine Feder, bevorzugt eine Druckfeder, bevorzugt eine Schraubendruckfeder, umfasst und/oder wobei die Überwindung der Lagervorspannkraft von einem akustischen Signal begleitet ist.

13. Verfahren zum Messen und Einstellen der Lagervorspannkraft auf einem Turbomolekularpumpen-Rotorlager, wobei das Verfahren die folgenden Schritte aufweist:
a) Bereitstellen einer Turbomolekularpumpe mit einem auslassseitigen Rotorwälzlager unter einer einstellbaren Vorspannkraft, einem einlassseitigen passiven Magnetlager mit einem inneren Lagerring (28) und einem äußeren Lagerring (29), wobei der innere Lagerring (28) zum Anordnen in der Turbomolekularpumpe konfiguriert ist, und einem Laufrad (6), das den äußeren Lagerring (29) aufweist;
b) Bereitstellen der Vorspannkraft-Messeinrichtung (100) nach einem der vorhergehenden Ansprüche;
c) Koppeln der Laufrad-Eingriffsfläche (12) mit dem Laufrad;
d) Bewegen des Aktors (4) relativ zur Laufrad-Eingriffsfläche gegen die elastische Vorspannung, um die Lagervorspannkraft zu überwinden; und
e) Ablesen eines Hinweises auf die Lagervorspannkraft von der Anzeigeeinrichtung (19, 20, 21), wenn die Lagervorspannkraft überwunden ist;
f) wobei das Verfahren ferner den Schritt aufweist: Einstellen der Lagervorspannkraft mithilfe der Messeinrichtung durch Drehen der Messeinrichtung (100) um ihre Längsachse, um den inneren Lagerring (28) des passiven Magnetlagers (30) relativ zu seinem äußeren Lagerring (29) zu bewegen, und optional erneutes Messen der Lagervorspannkraft, bevorzugt, ohne die Messeinrichtung aus der Turbomolekularpumpe zu entfernen.

## Revendications

1. Jauge (100) de force de précharge de roulement pour une pompe turbomoléculaire comprenant un roulement à rouleaux de rotor côté sortie soumis à une force de précharge réglable, un roulement magnétique passif côté entrée ayant une bague intérieure (28) et une bague extérieure (29), la bague intérieure (28) étant configurée pour être positionnée à l'intérieur de la pompe turbomoléculaire, et une roue (6) configurée pour s'engager avec la jauge (100), et la roue comprenant la bague extérieure (29), ladite jauge est configurée pour régler et indiquer la force de précharge de roulement, la jauge comprenant :
un carter (1), ledit carter (1) comprenant
des pattes d'entraînement de réglage de force de précharge (25, 26, 27), configurées, en cours d'utilisation, par rotation de la jauge (100) autour de son axe longitudinal, pour déplacer axialement la bague intérieure (28) par rapport à la bague extérieure (29) pour régler la force de précharge de roulement ; et
un indicateur (19, 20, 21) pour indiquer la force de précharge de roulement et un actionneur (4) couplé à une surface d'engagement de roue (12) configurée pour s'engager avec la roue avec un élément (3) configuré pour fournir une sollicitation élastique entre l'actionneur et la surface d'engagement de roue.

2. Jauge selon la revendication 1, configurée en cours d'utilisation, pour indiquer la force de précharge de roulement en couplant la surface d'engagement de roue à la roue de la pompe turbomoléculaire et en déplaçant l'actionneur par rapport à la surface d'engagement contre l'action de l'élément de sollicitation élastique pour surmonter la force de précharge de roulement.

3. Jauge selon la revendication 1 ou 2, dans laquelle l'actionneur, l'élément de sollicitation élastique, et un élément de positionnement de roue (2) comprenant la surface d'engagement de roue sont mobiles dans un mouvement de va-et-vient par rapport au carter.

4. Jauge selon les revendications 1 à 3 dans laquelle, lorsque la force de précharge de roulement est surmontée, l'indicateur fournit une indication précisant si la force de précharge de roulement se situe à l'intérieur ou en dehors d'une plage préférentielle prédéterminée.

5. Jauge selon la revendication 4, dans laquelle, lorsque la force de précharge de roulement est surmontée, l'indicateur fournit une première indication si la force de précharge de roulement est à l'intérieur de la plage préférentielle prédéterminée.

6. Jauge selon la revendication 5, dans laquelle, lorsque la force de précharge de roulement est surmontée, l'indicateur fournit une deuxième indication si la force de précharge de roulement est en dehors de la plage préférentielle prédéterminée, ladite deuxième indication étant différente de la première indication.

7. Jauge selon les revendications 4 à 6 dans laquelle, lorsque la force de précharge de roulement est surmontée, si la force de précharge de roulement est en dehors de la plage préférentielle prédéterminée, l'indicateur indique si la force de précharge de roulement est supérieur ou inférieur à la plage préférentielle prédéterminée.

8. Jauge selon l'une des revendications précédentes, dans laquelle l'indication fournie par l'indicateur est visuelle, et/ou dans laquelle l'indicateur comprend un indice (19, 20, 21, 34, 35) couplé au carter ou à l'actionneur, et un identifiant d'indice (23), dans laquelle en cours d'utilisation, l'indice et l'identifiant sont mobiles l'un par rapport à l'autre pour indiquer la force de précharge de roulement.

9. Jauge selon la revendication 8, dans laquelle un indice indique la limite inférieure d'une plage de force de précharge préférentielle prédéterminée, et un indice indique la limite supérieure de la plage de force de précharge préférentielle prédéterminée.

10. Jauge selon la revendication 8 ou 9, comprenant un indice indiquant si la force de précharge de roulement se situe dans une plage préférentielle prédéterminée.

11. Jauge selon la revendication 8, 9 ou 10, dans laquelle l'indice comprend une surface supérieure en escalier sur le carter, et dans laquelle une première étape indique une limite inférieure d'une plage de force de précharge préférentielle prédéterminée, et une deuxième étape indique la limite supérieure de la plage de force de précharge préférentielle prédéterminée, de préférence dans laquelle la première étape et la deuxième étape comprennent chacune un indice secondaire indiquant la plage de force de précharge préférentielle prédéterminée.

12. Jauge selon l'une des revendications précédentes dans laquelle l'élément de sollicitation élastique comprend un ressort, de préférence un ressort compressif, de préférence un ressort compressif hélicoïdal ; et/ou dans laquelle le fait de surmonter la force de précharge de roulement est accompagné d'un signal sonore.

13. Procédé de mesure et de réglage de la force de précharge de roulement sur un roulement de rotor de pompe turbomoléculaire, le procédé comprenant les étapes consistant à :
a) fournir une pompe turbomoléculaire comprenant un roulement à rouleaux de rotor côté sortie soumis à une force de précharge réglable, un roulement magnétique passif côté entrée ayant une bague intérieure (28) et une bague extérieure (29), la bague intérieure (28) est configurée pour être positionnée à l'intérieur de la pompe turbomoléculaire, et une roue (6) comprenant la bague extérieure (29) ;
b) fournir la jauge (100) de force de précharge selon l'une des revendications précédentes ;
c) coupler la surface d'engagement de roue (12) à la roue ;
d) déplacer l'actionneur (4) par rapport à la surface d'engagement de roue contre la sollicitation élastique de manière à surmonter la force de précharge de roulement ; et
e) lire une indication de la force de précharge de roulement à partir de l'indicateur (19, 20, 21) lorsque la force de précharge de roulement est surmontée ;
f) comprenant en outre l'étape de réglage de la force de précharge de roulement à l'aide de la jauge par la rotation de la jauge (100) autour de son axe longitudinal, pour déplacer la bague intérieure (28) du roulement magnétique passif (30) par rapport à sa bague extérieure (29) et facultativement mesurer à nouveau la force de précharge de roulement, de préférence sans retirer la jauge de la pompe turbomoléculaire.
